# EUROPEAN PATENT APPLICATION

(11) **EP 3 981 746 A1**
(43) Date of publication of application: **13.04.2022**
(21) Application number: 21201083.9
(22) Date of filing: 05.10.2021
(51) Int. Cl.: C02F 9/00, C02F 1/00, C02F 1/28, C02F 1/44, C02F 1/52, C02F 1/66, C02F 1/76, C02F 1/78, C02F 101/30

(54) **WATER TREATMENT METHOD AND EQUIPMENT FOR PERFORMING THIS METHOD**

(30) Priority: 06.10.2020 CZ 20200054
(71) Applicant: Envi-Pur, S.R.O., 16000 Praha 6, Dejvice (CZ)
(72) Inventor: HRUSKOVA, Petra, 41705 Osek (CZ); DRDA, Milan, 39201 Sobeslav (CZ)
(74) Representative: Kratochvil, Vaclav

(57) **Abstract**

The invention relates to a water treatment method, especially to drinking, technology, utility, feed and industrial, consisting of filtration, coagulation and flocculation where the inlet water is subjected to pressure coagulation and flocculation, and then it is filtered through a membrane filter, wherein pH and light absorbance are measured, and then pH and light absorbance are adjusted at the water inflow before pressure coagulation and flocculation. After filtering through the membrane filter, the water is filtered in a pressure filter with granular activated carbon. Further, it relates to equipment for performing this method containing a water inflow (1) behind which a flocculator (6), a filter and a treated water reservoir with a treated water offtake (15) are located, where behind the flocculator (6), a membrane filter (7) on the outlet of which sensors and a control unit (13) interconnected with the first reservoir (4) for acids and bases with their dispenser and the second reservoir (5) for coagulant and its dispenser before the flocculator (6) are located.

## Description

### Field of the Invention

The invention relates to water treatment using aggregation of impurities with the assistance of oxidizing agents and/or coagulants followed by filtration that may be supplemented with adsorption on activated carbon.

### Background of the Invention

Water engineering uses various technology processes and their arranging for raw water treatment to drinking, technology, utility, feed, industrial, etc. complying in its composition with relevant requirements. In older water treatment plants using groundwater and infiltrated river water, one-stage water treatment prevails which consists e.g. of aeration, coagulation, flocculation, elimination of formed suspension flakes on the filter with grainy material and subsequent sanitization, i.e. chlorination, alternatively ozonization or ultraviolet radiation. With a minor adjustment, these technologies are capable of removing also higher oxidation degrees of iron and manganese.

The treatment of surface water unlike groundwater and infiltrated water always requires a more complex grouping and controlling of processes with respect to a more significant temperature fluctuation and water composition, and usual occurrence of micro-organisms in surface water, e.g. actinomyces, fungi, green algae and blue-green algae. Occurrence of bacteria, viruses and parasites originating from digestive and urinary tracts of animals and humans is also of importance. In the last few decades, water treatment has become more complex and more operationally demanding also with respect to the undesirable occurrence of human and veterinary drugs, including antibiotics and also hormones originating from hormonal contraception which penetrate to surface waters from cleaned and non-cleaned municipal and industrial waste waters and outwashes. Pesticide and herbicide concentrations originating from agriculture are also important. All these substances are unacceptable in the drinking water; therefore, new water treatment procedures aimed to decrease their concentrations, possibly with their complete elimination, are being developed.

New procedures are appreciated, besides other things, for their higher volumetric efficiency, i.e. higher flow per one equipment volume unit and higher efficiency in removing insanitary substances in one equipment volume unit. The equipment with a higher volumetric efficiency also enables in-building into existing buildings as a replacement of the original equipment for a higher performance.

A significant element of the new procedures is represented by automated operation control, especially by dosing agents depending on the variable quality and temperature of the treated water.

The first membrane process successfully used in water technology was a reverse osmosis for sea water desalination in 1960s. However, the application of membranes for other processes of waste water treatment and cleaning was slow, so they found their use in separation processes (micro-, ultra- and nanofiltration) as late as at the beginning of the millennium. The process application is demanding in searching for optimum conditions and using suitable auxiliary agents and process controls.

The US patent No. 0282679 describes a general method for cleaning surface, underground and sea waters ("any effluent") by coagulation with a very low coagulant dose added before membrane filters. The coagulant dose is 30 to 80 times lower than corresponding to the zero zeta potential. Compared to that, the water-supply doses of the coagulant generally correspond to the proximity to zero zeta potential.

The US patent 0234793 covers a computer-controlled fluid analytics using fluorescent spectrophotometry. The analytics is used for continuous quality control of the treated water, and assessment of the coagulation and disinfection functions. This solution does not enable operation optimization depending on properties of the conveyed water.

### Summary of the Invention

The above stated deficiencies are to a large extent eliminated by a water treatment method, especially for drinking, technology, utility, feed and industrial, consisting of filtration, coagulation and flocculation according to this invention. Its essence is that the inlet water is subjected to pressure coagulation and flocculation, and then it is filtered through a membrane filter, wherein pH and light absorbance are measured, and then pH and light absorbance are adjusted at the water inflow before pressure coagulation and flocculation.

After filtering through the membrane filter, the water is preferably filtered in a pressure filter with granular activated carbon. Before filtration in the pressure filter with granular activated carbon, the water can be ozonized and/or organic substances can be chemically oxidized.

After pressure coagulation and flocculation, an oxidizing agent is preferably dosed for reduction of membrane filter fouling by residual dissolved organic substances.

pH adjustment by dosing an acid solution or a base solution, and dosing a coagulant in the preferred embodiment is carried out before pressure coagulation and flocculation.

For the stated method, equipment for performing the water treatment method, especially for drinking, technology, utility, feed and industrial, consisting of flocculation, coagulation and filtration, and containing a water inlet behind which a flocculator, filter and treated water reservoir with treated water offtake according to this invention is used. Its essence is that behind the flocculator, a membrane filter is located on the output of which sensors and a control unit are located; the control unit is connected with the first acid and base reservoir with their dispenser, and the second coagulant reservoir and its dispenser before the flocculator.

Behind the membrane filter, a pressure filter or a gravity filter with granular activated carbon is preferably located. In the preferred embodiment, the membrane filter is provided with a treated water inflow from the third treated water reservoir via the third pump and a pressure tank, wherein the fourth reservoir for chemical cleaning of the membrane filter using acid and the fifth reservoir for chemical cleaning of the membrane filter using hypochlorite are connected to the treated water inflow.

Between the pressure filter with granular activated carbon and the third reservoir, the second pump for washing water of the pressure filter is preferably located. A waste tank for the waste water is preferably connected to the membrane filter and the pressure filter with granular activated carbon. In the preferred embodiment, the membrane filter has the pore size of 0.05 to 0.12 µm.

The essence of the invention is that filtration of treated water via a membrane filter, usually with pore size in tenths up to hundredths of micrometres, with an upstream coagulation and flocculation stage that enables elimination, or substantial decrease of concentrations of unacceptable substances in the treated water without forming secondary products that in similar water treatment procedures are represented by substances with carcinogenic, teratogenic and mutagenic effects, e.g. chlorinated and brominated substances or bromates, and elimination of micro-organisms. The technology line is composed of individual modules, always containing a membrane filter capable of removing micro-organisms and resisting to the effect of chemically assisted cleaning using an acid or an oxidant. The number of modules is selected according to the required efficiency and performance of the water treatment plant.

The holding time of the treated water is in tens of minutes to hours in the prior art. The solution according to the invention is in tens of seconds to minutes. Therefore, the solution according to the invention enables to quickly respond to inlet water quality changes.

The technology line according to the invention is equipped with automatic monitoring of the treated water quality, eventually also of the raw water quality, that may be used for quick and accurate adjustments of coagulation agent dosing, and alternatively adjust pH and thus maintain the optimum coagulation conditions which guarantee a stable and compliant quality of the treated water. This arrangement minimizes the error rate of the coagulation control in prior art technology that may appear due to a long holding time in the technology line when controlling the process based only on raw water quality, especially at substantial fluctuations of the quality, i.e. turbid conditions, etc.

The arrangement of processes and their control enable to decrease the total concentration of substances in the treated water probably having an additive negative effect on human health. Current international recommendations, e.g. World Health Organization's guidelines from 2017 (ISBN: 978-92-4-154995-0), recommend such approach to protect the health of drinking water consumers.

### Brief Description of the Drawings

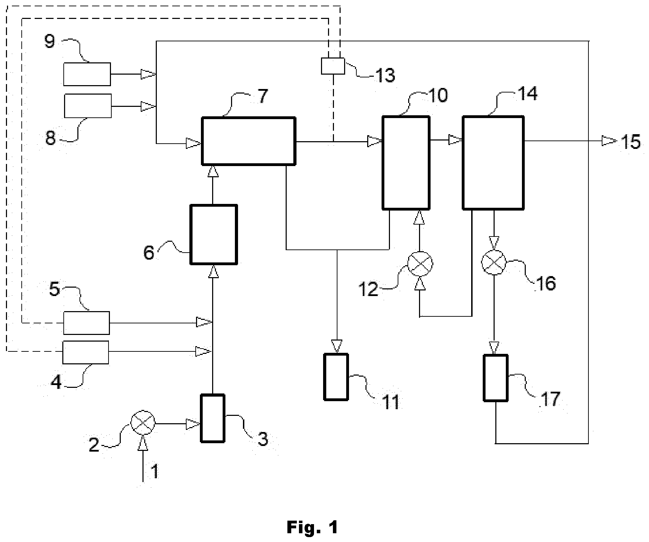

The invention will be described in more detail on a specific embodiment example using the attached drawing, where in Fig. 1, the block diagram of the stated invention is shown.

### Example of an Invention Embodiment

The water treatment method, especially to drinking, technology, utility, feed and industrial, consisting of filtration, coagulation and flocculation lies in subjecting the inlet water to pressure coagulation and flocculation, and then in its filtering through a membrane filter, wherein pH and light absorbance are measured, and then pH and light absorbance are adjusted at the water inflow before pressure coagulation and flocculation. After filtering through the membrane filter, the water is filtered in a pressure filter with granular activated carbon. Before filtration in the pressure filter with granular activated carbon, the water is ozonized and/or organic substances are chemically oxidized. After pressure coagulation and flocculation, an oxidizing agent is dosed for reduction of membrane filter fouling by residual dissolved organic substances. pH adjustment by dosing an acid solution or a base solution, and dosing a coagulant is carried out before pressure coagulation and flocculation.

The facility contains a water inflow *1* followed by a flocculator *6,* a filter and a treated water reservoir with a treated water offtake *15.* Behind the flocculator *6,* a membrane filter *7* having the pore size of 0.05 to 0.12 µm is situated; at the outlet of which sensors and a control unit 13 are located that are interconnected with an acid and base reservoir 4 with a dispenser and a coagulant 5 reservoir and its dispenser before the flocculator 6. Behind the membrane filter 7, a pressure filter or a gravity filter 10 with granular activated carbon is located. The membrane filter 7 is provided with a treated water inflow from a treated water reservoir 14 via a pump 16 and a pressure tank 17, wherein a solution reservoir 8 for chemical cleaning of the membrane filter 7 using acid and a reservoir 9 for chemical cleaning of the membrane filter 7 using hypochlorite are connected to the treated water inflow. Between the pressure filter 10 with granular activated carbon and the reservoir 14, a pump 12 for the washing water of the pressure filter 10 is located. A waste tank 11 for the waste water is connected to the membrane filter 7 and the pressure filter 10 with granular activated carbon.

In Fig. 1, the water treatment process arrangement is schematically shown, where the raw water from the inflow 1 is pumped by a pump 2 to a protective filter 3 with porosity in tens up to hundreds of micrometres. Behind this filter 3, the pressure flocculation 6 is arranged before which the acid or base solution is dosed as appropriate for pH adjustment from the reservoir 4 and the coagulant solution from the reservoir 5. Separation of flakes formed in flocculation 6 is performed in the membrane filter 7. The membrane filter 7 is periodically cleaned from captured flakes by washing with water from the treated water reservoir 14, from which the water is pumped for membrane filter 7 washing by a pump 16 to a pressure tank 17 for system washing. The flocculation process is controlled based on the signal from a control unit sensor 13 which monitors the pH value and the value of organic substance concentration, e.g. as absorbance of ultraviolet radiation, or of any other indicator, e.g. TOC, COD, colour, etc. Mostly physical measurements without using chemicals are involved. This facilitates the automated water treatment process control without operator's presence.

A practical example of the invention application is represented by the existing one-stage water treatment with a water offtake from a dam which does not deliver its original performance due to water quality deterioration and necessary coagulant dose increasing. The filtration speed has dropped from original design values of 4 m/h down to 2 m/h, and the treatment plant must be reconstructed. The original coagulant dosing and the pH adjustment will be retained but the treatment plant will be supplemented by a pipe flocculator, e.g. according to UV 14553, and instead of sand filtration, a ceramic membrane filter with characteristic pore size of 0.1 micrometre is used followed by a pressure filter with granular activated carbon. Both equipments are in-built into the area of the original sand filters. Behind the ceramic membrane filter 7, sensors for measuring pH and ultraviolet radiation absorption are located. The signal from measuring these quantities enters a new microprocessor control unit 13 that controls coagulant dispensing and pH adjustment.

For a chemically assisted washing of the membrane filter 7, sodium hypochlorite solution and diluted sulphuric acid dispensing is installed as well as a waste reservoir 11 for waste water from filter washing. For the subsequent membrane filter 7 washing by clean water, a 14 treated water reservoir with the pump 16 is established.

Since the membrane filter 7 produces water without micro-organisms, the original chlorination is limited only to the dose for water quality protection in the piping to consumers.

### Industrial Applicability

The proposed water treatment method, especially for drinking, technology, utility, feed and industrial, and equipment for performing this water treatment method finds wide application in water treatment plants, especially from surface sources, and helps to improve the quality of the treated water.

## Claims

1. A water treatment method, especially to drinking, technology, utility, feed and industrial, consisting of filtration, coagulation and flocculation, where the inlet water is subjected to pressure coagulation and flocculation, and then it is filtered through a membrane filter ***characterised in that*** pH and light absorbance are measured, and then pH and light absorbance are adjusted at the water inflow before pressure coagulation and flocculation; and after filtration via a membrane filter, the water is filtered in a pressure filter with granular activated carbon.

2. The method according to claim 1 ***characterised in that*** before filtration in the pressure filter with granular activated carbon, the water is ozonized and/or organic substances are chemically oxidized.

3. The method according to claim 1 or 2 ***characterised in that*** after pressure coagulation and flocculation, an oxidizing agent is dosed for reduction of membrane filter fouling by residual dissolved organic substances.

4. The method according to any claim 1 to 3 ***characterised in that*** pH adjustment by dosing an acid solution or a base solution, and dosing a coagulant is carried out before pressure coagulation and flocculation.

5. An equipment for performing the water treatment method, especially to drinking, technology, utility, feed and industrial consisting of flocculation, coagulation and filtration, and containing a water inflow (1) behind which a flocculator (6), a filter and a treated water reservoir with a treated water offtake (15) are located ***characterised in that*** behind the flocculator (6), a membrane filter (7) on the outlet of which sensors and a control unit (13) interconnected with a reservoir (4) for acids and bases with their dispenser and a reservoir (5) for coagulant and its dispenser before the flocculator (6) are located.

6. The equipment according to claim 5 ***characterised in that*** behind the membrane filter (7), a pressure filter or a gravity filter (10) with granular activated carbon is located.

7. The equipment according to claim 5 or 6 ***characterised in that*** the membrane filter (7) is provided with a treated water inflow from a treated water reservoir (14) via a pump (16) and a pressure tank (17), wherein a solution reservoir (8) for chemical cleaning of the membrane filter (7) using acid and a reservoir (9) for chemical cleaning of the membrane filter (7) using hypochlorite are connected to the treated water inflow.

8. The equipment according to claim 6 or 7 ***characterised in that*** between the pressure filter (10) with granular activated carbon and the reservoir (14), the second pump (12) for washing water of the pressure filter (10) is located.

9. The equipment according to any claim 6 to 8 ***characterised in that*** a waste tank (11) for the waste water is connected to the membrane filter (7) and the pressure filter (10) with granular activated carbon.

10. The equipment according to any claim 5 to 9 ***characterised in that*** the membrane filter (7) has the pore size of 0.05 to 0.12 µm.
